(19) Europäisches Patentamt
European Patent Office
Office européen des brevets

(11) **EP 3 464 884 B1**

(12) **EUROPÄISCHE PATENTSCHRIFT**

(45) Veröffentlichungstag und Bekanntmachung des Hinweises auf die Patenterteilung:
**23.12.2020 Patentblatt 2020/52**

(21) Anmeldenummer: **17732789.7**

(22) Anmeldetag: **07.06.2017**

(51) Int Cl.:
**F03D 1/06** (2006.01)

(86) Internationale Anmeldenummer:
**PCT/EP2017/063760**

(87) Internationale Veröffentlichungsnummer:
**WO 2017/211855 (14.12.2017 Gazette 2017/50)**

(54) **ROTORBLATT EINER WINDENERGIEANLAGE**

ROTOR BLADE FOR A WIND TURBINE

PALE DE ROTOR D'UNE ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.06.2016 DE 102016110510**

(43) Veröffentlichungstag der Anmeldung:
**10.04.2019 Patentblatt 2019/15**

(73) Patentinhaber: **Wobben Properties GmbH**
**26607 Aurich (DE)**

(72) Erfinder: **MESSING, Ralf**
**26605 Aurich (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
**DE-A1-102009 060 650      DE-B3-102012 206 109**
**JP-A- H06 264 701**

- **PHENGPOM TINNAPOB ET AL: "Study on blade surface flow around wind turbine by using LDV measurements", JOURNAL OF THERMAL SCIENCE, KEXUE CHUBANSHE, CN, Bd. 24, Nr. 2, 11. März 2015 (2015-03-11), Seiten 131-139, XP035466449, ISSN: 1003-2169, DOI: 10.1007/S11630-015-0765-3 [gefunden am 2015-03-11]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft ein Rotorblatt eines Rotors einer Windenergieanlage. Weiterhin betrifft die vorliegende Erfindung einen entsprechenden Rotor einer Windenergieanlage. Darüber hinaus betrifft die vorliegende Erfindung eine entsprechende Windenergieanlage.

Windenergieanlagen sind allgemein bekannt und der heutzutage am häufigsten anzutreffende Windenergieanlagentyp ist eine sog. Horizontalachsen-Windenergieanlage. Bei einer solchen Windenergieanlage dreht ein Rotor mit Rotorblättern, die im Wesentlichen in einer Rotorebene angeordnet sind, um eine im Wesentlichen horizontale Drehachse. In der Regel werden Windenergieanlagen für eine mittlere Windgeschwindigkeit ausgelegt, wobei die Länge bzw. der Radius der Rotorblätter sowie die mittlere Windgeschwindigkeit am Aufstellort der Windenergieanlage im Zusammenhang mit der von der Windenergieanlage erzeugten Leistung stehen.

Die Fachwelt kennzeichnet die Position auf einem Rotorblatt in Rotorblattlängsachse auch als Radius der jeweiligen Position bezogen auf einen Außenradius des Rotors. Dadurch kann die betreffende Position auf dem Rotorblatt als Radius mit einem Wert im Bereich von 0 bis 1 angegeben werden. Die Verwendung des Radius zur Beschreibung einer Position entlang des Rotorblatts ist darin begründet, dass Rotorblätter für ihren bestimmungsgemäßen Einsatz zur Montage an einem Rotor einer Windenergieanlage vorgesehen sind. Rotorblätter sind also immer fest einem Rotor zugeordnet, so dass die Verwendung des Radius als Referenzgröße herangezogen wird. Der normierte Radius weist im Mittelpunkt des Rotors, also in der Rotordrehachse, den Wert 0 (Null) auf. An der Blattspitze, die den am weitesten außen liegenden Punkt des Rotors kennzeichnet, weist der normierte Radius den Wert 1 (Eins) auf.

Um auch Standorte mit geringen mittleren Windgeschwindigkeiten wirtschaftlich attraktiv zu machen, werden die Längen bzw. die Radien der Rotorblätter bei neu zu entwickelnden Windenergieanlagen immer weiter gesteigert. Beim Rotorblattentwurf für eine Windkraftanlage werden die Geometrie des Rotorblattes und in Verbindung mit den Profilen die aerodynamischen Eigenschaften des Rotorblattes festgelegt. Wichtige geometrische Parameter eines Rotorblattentwurfes sind die Blatttiefe, die Blattdicke, die daraus resultierende relative Blattdicke sowie der geometrische Einbauwinkel. Die aerodynamischen Eigenschaften eines Rotorblatts hängen im Wesentlichen von der Form, also der Geometrie, des Profils des Rotorblatts ab. Ein Profilschnitt kennzeichnet dabei einen senkrechten Schnitt durch das Rotorblatt bezogen auf eine Rotorblattlängsachse. Aufgrund der sich mit dem Radius des Rotorblatts ändernden Umlaufgeschwindigkeit, und damit auch des sich ändernden Anströmwinkels ist es zweckmäßig auch die Form des Profilschnitts mit größer werdendem Radius zu ändern, also an die sich ändernde Umlaufgeschwindigkeit anzupassen.

Ein solches Profil weist in Bewegungsrichtung, also in Umlaufrichtung des Rotorblatts, eine Profilvorderkante und eine zur Profilvorderkante abgewandte Profilhinterkante auf. Die Profilvorderkante, die auch als Profilnase bezeichnet werden kann, ist durch einen Vorderkantenradius, der auch als Nasenradius bezeichnet wird, gekennzeichnet, wobei die Profilhinterkante häufig in einem Winkel spitz zuläuft. Eine Verbindungsgerade von der Profilvorderkante zur Profilhinterkante wird Profilsehne genannt. Der Abstand der Profilvorderkante zu der Profilhinterkante wird Profiltiefe genannt.

Die größte Erstreckung zwischen einer Oberseite des Profils, der Saugseite, und einer Unterseite des Profils, der Druckseite, wird Profildicke genannt. Das Verhältnis aus Profildicke zu Profiltiefe wird als relative Profildicke bezeichnet. Die relative Profildicke wird also groß, wenn das Profil eine hohe Dicke und/oder eine geringe Tiefe aufweist.

Im Betrieb wird das Profil von Luft umströmt. Dabei wird die resultierende Richtung, aus der die Luft auf die Profilvorderkante trifft, als Anströmrichtung bezeichnet. Die resultierende Richtung setzt sich aus der Umfangsgeschwindigkeit des Profils und der der auf die Windenergieanlage treffenden Windgeschwindigkeit und Windrichtung zusammen. Der Winkel zwischen der Profilsehne und der Anströmrichtung wird dabei als Anstellwinkel des Profils bezeichnet.

Ein Profil wird hinsichtlich eines bestimmten Betriebsbereichs, in dem das Profil arbeiten soll, ausgelegt. Der Betriebsbereich ist dabei u.a. durch die zu erwartende Anströmgeschwindigkeit gekennzeichnet. Die Auslegung des Profils erfolgt auch hinsichtlich eines maximalen Anstellwinkels. Da sich aufgrund der höheren Umlaufgeschwindigkeit auch die resultierende Anströmrichtung und -geschwindigkeit ändert, ändert sich dadurch auch der Anstellwinkel des Profils. Der lokale Anstellwinkel legt schließlich den lokalen Auftrieb und Widerstand des Rotorblattes fest. Es ist vor allem darauf zu achten, dass der lokale Anstellwinkel in jedem Betriebszustand der Windkraftanlage kleiner ist als der lokale positive Stallwinkel, bei dem typischerweise der Auftrieb stark abnimmt und der Widerstand deutlich zunimmt und sich somit die aerodynamische Güte signifikant verschlechtert.

Als positiver Stall wird ein Strömungszustand bezeichnet, bei dem sich bei hohen positiven effektiven Anstellwinkeln die Strömung auf der Saugseite des Profils ablöst. Die Ablösung startet bei korrekt ausgelegten Profilen an der Profilhinterkante und wandert mit weiter zunehmenden effektiven Anstellwinkeln in Richtung der Profilvorderkante. Dieser Strömungszustand ist durch die Rotorblattauslegung, insbesondere durch eine geeignete Wahl des Einbauwinkels für jeden Betriebszustand der Windkraftanlage zu vermeiden.

Durch eine Verwindung des Rotorblattes wird der Einbauwinkel den Anströmverhältnissen angepasst.

Der Einbauwinkel wird dabei als der Winkel zwischen der Profilsehne und der Rotorebene im Ruhezustand verstanden.

Moderne Windenergieanlagen weisen so genannte Pitchverstelleinrichtungen auf, mit der der Anstellwinkel des Profils während des Betriebs verändert werden kann, in dem das komplette Rotorblatt um die Rotorblattlängsachse gedreht wird. Vereinfacht ausgedrückt wird durch die Pitchverstelleinrichtungen der Einbauwinkel des Rotorblattes verändert.

Bei einer Vergrößerung der Länge bzw. des Radius eines Rotorblattes müssen auch die mechanischen Eigenschaften angepasst werden, um bspw. eine ausreichende Steifigkeit des Rotorblattes zu gewährleisten, die auch Auswirkungen auf die aerodynamischen Eigenschaften des Rotorblattes hat. Ein reines Versteifen des Rotorblattes führt aber zu einem bedeutend erhöhten Gewicht des Rotorblattes.

Das Deutsche Patent- und Markenamt hat in der Prioritätsanmeldung zu vorliegender Anmeldung folgenden Stand der Technik recherchiert: DE 10 2008 052 858 A1, DE 10 2009 060 650 A1, US 2014/0119915 A1, US 2014/0286787 A1, EP 0 100 131 A1 und EP 2 840 255 A2.

Der vorliegenden Erfindung liegt somit die Aufgabe zugrunde, zumindest eins der oben genannten Probleme zu adressieren. Insbesondere soll eine Lösung vorgeschlagen werden, das Gewicht und das Ablöseverhalten von langen Rotorblättern zu optimieren.

Zumindest soll zu bisherigen Rotorblättern eine alternative Lösung vorgeschlagen werden.

Erfindungsgemäß wird ein Rotorblatt gemäß Anspruch 1 vorgeschlagen.

Ein solches Rotorblatt eines aerodynamischen Rotors einer Windenergieanlage mit einer Rotordrehachse und einem Außenradius, umfasst somit eine Blattwurzel zum Befestigen an einer Rotornabe, eine zur Blattwurzel abgewandte Blattspitze, eine von der Blattwurzel zur Blattspitze verlaufende Blattlängsachse, eine in Bewegungsrichtung des Rotorblattes nach vorne weisenden Blattvorderkante, eine in Bewegungsrichtung des Rotorblattes nach hinten weisenden Blatthinterkante und sich entlang der Blattlängsachse verändernden Profilschnitten, wobei jeder Profilschnitt eine sich von der Blattvorderkante zur Blatthinterkante erstreckende Profilsehne aufweist und jede Profilsehne einen Einbauwinkel als Winkel in Bezug auf eine Rotorebene aufweist, wobei der Einbauwinkel von der Blattwurzel zur Blattspitze in einem zur Blattwurzel weisenden Blattinnenbereich zunächst abnimmt, in einem Blattmittelbereich wieder zunimmt und in einem zur Blattspitze weisenden Blattspitzenbereich wieder abnimmt. Hierbei und in der weiteren Beschreibung der Erfindung bezieht sich der Einbauwinkel auf einen ungepitchten Betriebszustand, also auf einen Betriebszustand, bei dem die Rotorblätter nicht aus dem Wind gedreht sind. Ein solcher Betriebszustand liegt besonders in einem unteren Teillastbetrieb vor.

Das Blatt kann dazu an der Blattwurzel einen großen Einbauwinkel aufweisen, der einen Wert von 60° aufweisen kann, um nur ein Beispiel zu nennen. Dieser Einbauwinkel nimmt dann zur Blattspitze hin zunächst immer weiter ab. Aber noch vor Erreichen der Blattspitze, nämlich in einem Blattmittelbereich, nimmt der Einbauwinkel dann wieder zu. Bei Profilschnitten, die dann noch weiter zur Blattspitze hin liegen, nimmt der Einbauwinkel dann wieder ab, bis er in der Nähe der Blattspitze oder an der Blattspitze seinen kleinsten Wert erreicht hat.

Ein Rotorblatt ist besonders deswegen verwunden, weil die Bahngeschwindigkeit jedes Punktes auf dem Rotorblatt, also auch jedes Profilschnittes, mit zunehmendem Abstand zur Drehachse zunimmt und sich dadurch die lokale Anströmrichtung mit zunehmendem Abstand zur Drehachse kontinuierlich verändert. Durch die Verwindung kann der Anstellwinkel über den gesamten Radius möglichst konstant gehalten werden.

Es wurde nun aber erkannt, dass es vorteilhaft sein kann, den Anstellwinkel nicht über den gesamten Radius des Rotors konstant zu halten. Dabei wurde erkannt, dass es auch wichtig ist, einen Strömungsabriss zu vermeiden. Ein Strömungsabriss hängt aber auch vom Profil bzw. Profilschnitt ab. Besonders wurde ganz allgemein erkannt, dass dicke Profile schon bei kleineren Anstellwinkeln zu einem Strömungsabriss neigen können, als dies für dünnere Profile der Fall ist. Für dicke Profile kann es daher sinnvoll sein, einen kleineren Anstellwinkel vorzusehen als für dünnere Profile.

Daraus wurde der Vorschlag abgeleitet, dass der Einbauwinkel in dem Blattmittelbereich wieder zunimmt, um dadurch lokal den Anstellwinkel zu verringern. Es wurde erkannt, dass von der Rotordrehachse kommend der Einbauwinkel zunächst mit zunehmendem Abstand von der Drehachse abnimmt, um die Zunahme der Bahngeschwindigkeit zu berücksichtigen. In dem Blattmittelbereich kann dann aber ein so kleiner Anstellwinkel gewählt werden, dass er erst durch Zunahme des Einbauwinkels erreicht wird. Mit noch weiterem Abstand zur Drehachse wird dann wieder ein größerer Anstellwinkel gewählt und/oder die Zunahme der Bahngeschwindigkeit wieder stärker berücksichtigt, so dass der Einbauwinkel wieder kleiner gewählt wird.

Hier liegt auch die Erkenntnis zugrunde, dass die baulichen Eigenschaften des Rotorblattes, insbesondere die Masse des Rotorblatts und somit die auf die Windenergieanlage wirkenden Lasten, verringert werden können, wenn Profile mit hohen relativen Profildicken weiter nach außen in Richtung der Blattspitze verschoben werden, das Rotorblatt also in dem Blattmittelbereich und/oder in dem Blattspitzenbereich abschnittsweise vergleichsweise hohe relative Profildicken aufweist.

Besonders durch eine Verschiebung von dicken Profilen nach außen in Richtung zur Blattspitze können sich die beschriebenen Effekte ergeben, dass ein Strömungsabriss schon bei einem niedrigen Anstellwinkel auftreten kann. Das Auftreten von Strömungsablösung bei dicken Profilen im Blattmittelbereich kann durch den vorgeschlagenen Verlauf des Einbauwinkels vermieden werden. Besonders Hinterkantenablösungen, die in leistungstragenden und schallsensiblen Bereichen stattfanden, können durch die vorgeschlagene Lösung vermieden werden, während gleichzeitig ein leichteres, besonders dabei größeres Blatt geschaffen werden kann.

Es wurde weiterhin erkannt, dass beispielsweise für Betriebsmodi mit reduzierter Nenndrehzahl für einen schallreduzierten Betrieb der Anlage der maximal notwendige Pitchwinkel des gesamten Rotorblattes verringert werden kann, wenn der Einbauwinkel nur in einem Teilbereich erhöht wird. Wird nämlich der Einbauwinkel in einem kritischen Bereich, in dem zuerst mit einem Strömungsabriss zu rechnen ist, so verändert, dass dort nicht mehr so leicht mit einem Strömungsabriss zu rechnen ist, muss das gesamte Rotorblatt insgesamt weniger gepitcht werden. Ansonsten bestimmt nämlich dieser kritische Bereich den maximal notwendigen Pitchwinkel des gesamten Blattes. Ein erfindungsgemäßes Rotorblatt weist somit in dem Mittelbereich einen Anstieg des Einbauwinkels auf, um den effektiven Anstellwinkel im Betrieb zu verringern. Zur Blattspitze hin verringert sich die relative Profildicke wieder, so dass auch der Einbauwinkel geringer ausfallen kann. Insofern ergibt sich erfindungsgemäß ein Verlauf des Einbauwinkels, bei dem der Einbauwinkel im Bereich der Blattwurzel groß ist und entlang der Blattlängsachse zunächst abnimmt, anschließend in einem Bereich wieder zunimmt und anschließend wieder abnimmt. Ein Ablösen der Strömung an dem Rotorblatt im Betrieb wird durch diesen erfindungsgemäßen Verlauf des Einbauwinkels auch in einem Mittelbereich mit erhöhter relativer Blattdicke verhindert.

Eine weitere Ausgestaltung des Rotorblatts schlägt vor, dass zumindest abschnittsweise in einem Bereich größer 60% bezogen auf den Außenradius Profilschnitte eine relative Profildicke mit einem Wert größer als 0,25 aufweisen. Durch Verschieben hoher relativer Profildicken in Richtung des Blattspitzenbereichs, wird eine Verbesserung des Rotorblattes hinsichtlich Gewicht und Masse und struktureller Eigenschaften erzielt. Auf diese Weise lassen sich lange Rotorblätter mit besonders geringem Gewicht realisieren, wobei gleichzeitig ein Ablösen der Strömung an dem Rotorblatt besonders in einem Mittelbereich mit erhöhter relativer Blattdicke verhindert wird. Es kann somit durch die vorgeschlagene Lösung des Verlaufs des Einbauwinkels ein vergleichsweise dickes Profil noch außerhalb von 60% des Rotors realisiert werden. Dadurch ist ein vergleichsweise langes Rotorblatt realisierbar.

Die Erfindung sieht vor, dass der Einbauwinkel in dem Blattmittelbereich von 35% bis 60% bezogen auf den Außenradius ansteigt. Durch die Verschiebung hoher relativer Profildicken in Richtung größerer Radiusbereiche sinken in diesen Bereichen mit hoher relativer Profildicke die Grenzanstellwinkel, also die maximal zulässigen Anstellwinkel für diesen Profilschnitt. Eine Zunahme des Einbauwinkels wirkt diesem Effekt entgegen. Mit Zunahme der Einbauwinkel der Profile sinkt im Betrieb der effektive Anstellwinkel. Dadurch wird eine Ablösung der Strömung in diesem Bereich verhindert. Dadurch kann in diesem Bereich von 35% bis 60% ein Rotorblattabschnitt mit großer Dicke geschaffen werden, um hierdurch das Rotorblatt mit guter Tragstruktur und vergleichsweise geringem Gewicht lang auszubilden. Dadurch kann eine bauliche Verbesserung gegenüber einem herkömmlichen Rotorblatt erzielt werden, das in diesem mittleren Bereich ansonsten bereits sehr dünn ausgebildet ist.

Somit erstreckt sich hier der Blattmittelbereich ungefähr in einem Radius von 35% bis 60% bezogen auf den Außenradius. Es wurde erkannt, dass eine Erhöhung des Einbauwinkels in diesem Bereich Effekte, die durch Verschieben von großen relativen Profildicken in größere Radiusbereiche des Blattes entstehen, ausgleichen kann. Zusätzlich wurde erkannt, dass eine Erhöhung der relativen Profildicke über diesen Radiusbereich hinaus Vorteile für die strukturellen bzw. mechanischen Eigenschaften besonders eines verlängerten Rotorblattes bewirkt. Dabei wurde erkannt, dass in einem Bereich von 35% bis 80% eine Strukturverbesserung durch Verwendung dicker Profile erreicht werden kann. Dazu wird in dem genannten Bereich von 35% bis 60% eine Erhöhung des Einbauwinkels vorgeschlagen, die nicht bis zu den 80% zu gehen braucht. Es wird dadurch dort eine hohe Festigkeit bei geringem Gewicht erreicht. Eine Verdickung des Rotorblattes in einem Bereich weiter außen, nämlich für Positionen oberhalb 80%, kann vermieden werden. Durch die Verschiebung hoher relativer Dicken in diesen Radiusbereich von 35% bis 80% kann sich dadurch die Masse des Rotorblattes gegenüber einfach verlängerten Rotorblättern mit erhöhter Steifigkeit verringern. Die höhere Profildicke bewirkt aber auch eine Verringerung des maximal zulässigen Anstellwinkels in diesem Bereich bevor sich die Strömung ablöst. Daher ist vorgesehen, den Einbauwinkel in diesem Bereich zu erhöhen, um so den effektiven Anstellwinkel während des Betriebs zu verringern, um ein Ablösen der Strömung zu verhindern.

In einer Ausgestaltung des erfindungsgemäßen Rotorblattes weist der Einbauwinkel in einem Bereich zwischen 35% und 80% bezogen auf den Außenradius ein lokales Maximum auf. Das lokale Maximum spiegelt den Anstieg des Einbauwinkels in dem Blattmittelbereich wieder und ermöglicht eine hohe relative Profildicke in höheren Radiusbereichen. In diesem Bereich des lokalen Maximums kann ein entsprechend dickes Profil und damit ein strukturstarker Bereich ermöglicht werden.

Eine weitere Ausgestaltung des Rotorblatts schlägt vor, dass der Einbauwinkel in einem Bereich zwischen 80% und 100% bezogen auf den Außenradius ein lokales, insbesondere ein absolutes Minimum aufweist. In Richtung zur Blattspitze nimmt die relative Profildicke vom Blattmittelbereich ab, so dass die Profile zur Blattspitze hin wieder dünner werden. Dünne Profile erlauben einen hohen maximalen Anstellwinkel. Dadurch kann der Einbauwinkel in Richtung zur Blattspitze hin nach Durchlaufen des Maximums abnehmen und im Blattspitzenbereich ein lokales und/oder absolutes Minimum aufweisen. Deshalb können die Profilsehnen in der Nähe der Blattspitze in Bezug auf die Rotorebene einen kleinen Winkel aufweisen. Vorzugsweise sind das lokale Maximum und das lokale Minimum um wenigstens 15% zueinander beabstandet, um einen kontinuierlichen bzw. allmählichen Übergang zu schaffen.

Gemäß einer anderen Ausführungsform wird vorgeschlagen, dass die Einbauwinkel der Profilsehnen über die gesamte Rotorblattlänge bzw. den Radius positiv sind, nämlich bezogen auf die Rotorebene, die hier als Referenzgröße verwendet wird. Durch den erneuten Anstieg des Einbauwinkels in dem Blattmittelbereich, weisen auch die in Richtung Blattspitze nachfolgenden Bereiche des Rotorblatts einen höheren Einbauwinkel auf, als es aus dem Stand der Technik bekannt ist. Der Verlauf des Einbauwinkels nimmt über den Radius in dem Blattmittelbereich wieder zu, so dass er über den gesamten Rotorradius positiv ist.

In einer Ausgestaltung des Rotorblatts beträgt der Einbauwinkel in einem Bereich zwischen 30% und 40% bezogen auf den Außenradius 4° und in einem Bereich zwischen 45% und 60% bezogen auf den Außenradius 5° und in einem Bereich zwischen 85% und 95% bezogen auf den Außenradius ungefähr 1°. Diese besondere Ausgestaltung ermöglicht ein langes und leichtes Rotorblatt. Aufgrund hoher relativer Blattdicken im höheren Radiusbereich ist das Rotorblatt dennoch robust. Der Einbauwinkel ist so ausgelegt, dass im Betrieb keine Strömungsablösungen an der Profilhinterkante auftreten, die sonst zu einer Ertragsminderung und Lärmerhöhung der Windenergieanlage führen würden.

In einer Ausführungsform des Rotorblatts erstreckt sich der Blattinnenbereich ungefähr bis zu einem Radius von 35% bezogen auf den Außenradius. Der Blattinnenbereich kennzeichnet den Bereich, in dem der Einbauwinkel von der Blattwurzel in Richtung Blattspitze abnimmt. Hierdurch wird die Zunahme der Umlaufgeschwindigkeit in diesem Bereich mit zunehmend größerem Radius ausgeglichen. Somit bleibt im Wesentlichen in diesem Bereich der Anstellwinkel der Profile konstant.

Vorzugsweise ist das Rotorblatt dadurch gekennzeichnet, dass ein Verhältnis des Einbauwinkels bei einer Radiusposition von ungefähr 60% zu dem Einbauwinkel bei einer Radiusposition von 40% größer als 1,2, vorzugsweise größer als 1,5, insbesondere größer als 2 ist. Damit liegt eine signifikante Vergrößerung des Einbauwinkels bei etwa 60% im Vergleich zur Radiusposition bei 40% vor. Es wurde erkannt, dass dadurch ein vorteilhafter Übergang von dem Bereich eines ersten lokalen Minimums des Einbauwinkels zu einem lokalen Maximum und weiterem anschließenden Abfall des Einbauwinkels erreicht werden kann. Dafür sind die Positionen von 40% und 60% charakteristische Positionen, um einen ersten Bereich einer Blattverdickung zu kennzeichnen.

In noch einer weiteren Ausführungsform des Rotorblatts erstreckt sich der Blattspitzenbereich in einem Radius größer als 60% bezogen auf den Außenradius. Es wurde somit erkannt, wie oben erläutert wurde, dass in dem Bereich ab 60% die relative Profildicke wieder abnehmen kann. Der Blattspitzenbereich kennzeichnet den Radiusbereich, in dem der Einbauwinkel in Richtung Blattspitze wieder abnimmt. Durch die Abnahme des Einbauwinkels steigt der effektive Anstellwinkel in diesem Bereich an. Da jedoch die relative Profildicke in diesem Bereich abnimmt, ist sichergestellt, dass die Strömung am Rotorblatt in diesem Bereich weiterhin anliegt und der maximal zulässige Anstellwinkel im gesamten Betriebsbereich der Windenergieanlage unterschritten bleibt.

Darüber hinaus wird erfindungsgemäß ein Rotor einer Windenergieanlage mit einer Rotordrehachse und einem Außenradius vorgeschlagen, wobei der Rotor mindestens ein Rotorblatt gemäß einer vorstehend beschriebenen Ausführungsform aufweist.

Ferner wird eine entsprechende Windenergieanlage mit einem solchen Rotor vorgeschlagen.

Die Erfindung wird nachfolgend anhand von Ausführungsformen unter Bezugnahme auf die begleitenden Figuren beispielhaft beschrieben.

Fig. 1a bis 1c    zeigen eine schematische Darstellung von Verläufen relativer Profildicken und Grenzanstellwinkeln über den Rotorradius.

Fig. 2    zeigt eine schematische Darstellung eines erfindungsgemäßen Verlaufs der relativen Profildicke über den Rotorradius.

Fig. 3    zeigt eine schematische Darstellung eines erfindungsgemäßen Verlaufs des Einbauwinkels über den Rotorradius.

Fig. 4    schematisch eine perspektivische Ansicht einer Ausführungsform eines Rotorblattes.

Fig. 5    zeigt eine Windenergieanlage perspektivisch in einer schematischen Darstellung.

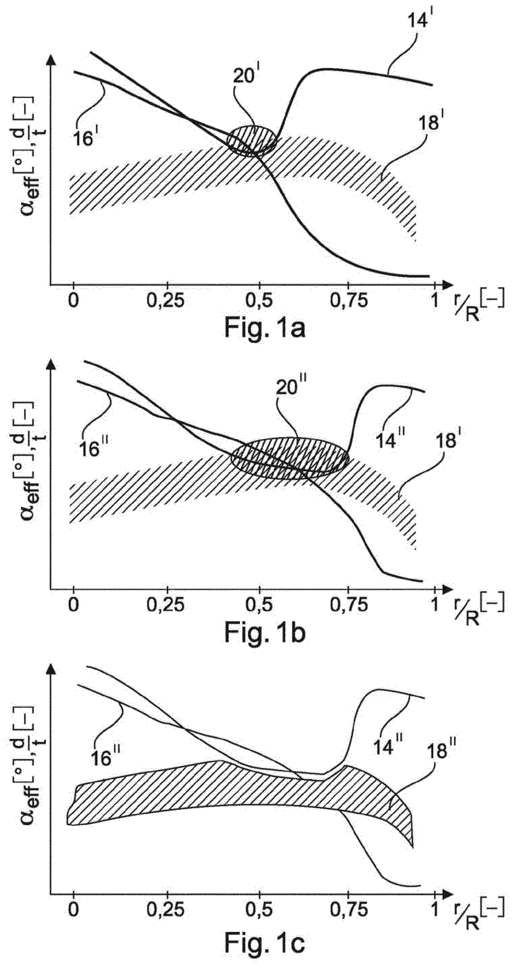

Fig. 1a zeigt ein Diagramm, in dem schematisch die Verläufe des maximal zulässigen Anstellwinkels 14', nämlich des Stallwinkels, und der relativen Profildicke 16' in Abhängigkeit ihrer Position r entlang der Blattlängsachse aufgetragen sind. Die Position r ist durch ihren relativen Radius r/R bezogen auf den Außenradius R des Rotors normiert angegeben mit Werten von 0 bis 1, die somit Werten von 0% bis 100% entsprechen. Fig. 1a zeigt die Verhältnisse wie sie typischerweise bei einem Rotorblatt nach dem Stand der Technik vorliegen. In dem Diagramm der Fig. 1a ist der Stallwinkel 14' als Grenzwinkel 14' für ein verschmutztes beziehungsweise ein nasses Rotorblatt aufgetragen. Der Grenzwinkel 14' kann dabei als maximal zulässiger effektiver Anstellwinkel $\alpha_{eff}$ des Rotorblattes im Betrieb der Windenergieanlage angesehen werden. Zusätzlich ist in dem Diagramm der Fig. 1a der Verlauf 16' der relativen Profildicke d/t eines Rotorblattes des Standes der Technik dargestellt.

Der Verlauf 14' des maximalen Anstellwinkels und der Verlauf 16' der relativen Profildicke d/t stehen in einem Zusammenhang zueinander. Im Bereich der Blattwurzel weist das Rotorblatt eine hohe relative Profildicke auf. Aufgrund der im Vergleich zur Blattspitze niedrigen Umfangsgeschwindigkeit ist auch ein hoher maximaler Anstellwinkel 14' im Bereich der Blattwurzel möglich, da sich Rotationseffekte am drehenden Rotorblatt stabilisierend auf die Grenzschichtströmung auswirken. Von der Blattwurzel bis zu einer Radiusposition von ungefähr r/R<0,35 sinkt der maximal zulässige Anstellwinkel 14'. Mit zunehmendem Rotorradius r/R nimmt die relative Profildicke ab, sodass das Profil des Rotorblattes schlanker wird. Beispielsweise kann die Dicke des Profils kleiner werden, wenn die Tiefe des Profils konstant bleibt. Mit zunehmendem Radius steigt aber die Umfangsgeschwindigkeit an , stabilisierende Effekte schwächen sich ab, daher nimmt auch der maximal zulässige Anstellwinkel 14' mit zunehmendem Rotorradius zunächst ab.

Der Anströmwinkel der Luft auf das Rotorblatt ändert sich ebenfalls mit zunehmendem Radius, da sich die Umlaufgeschwindigkeit des Rotorblatts mit zunehmendem Radius erhöht. In dem Diagramm der Fig. 1a ist ein Bereich 18' des effektiven Anstellwinkels im Betrieb dargestellt. Der effektive Anstellwinkel errechnet sich aus dem lokalen Anströmwinkel abzüglich des lokalen Einbauwinkels nach der Formel:

$$\alpha_{eff}(r) = \alpha(r) - \alpha_{Bau}(r)$$

wobei $\alpha_{eff}(r)$ den effektiven Anstellwinkel an der Rotorposition r, $\alpha(r)$ den lokalen Anströmwinkel an der Rotorposition r und $\alpha_{Bau}(r)$ den lokalen Einbauwinkel an der Rotorposition r bezeichnet. Hierbei ist vereinfachend davon ausgegangen worden, dass das betrachtete Rotorblatt weder gepitcht ist, noch tordiert ist bzw. dass ein Pitchwinkel und ein Torsionswinkel im Einbauwinkel mit berücksichtigt sind, insbesondere auf ihn aufaddiert enthalten sind.

Der Bereich 18' des effektiven Anstellwinkels im Betrieb ist als Bereich dargestellt, weil der Wind schwankt, so dass auch der Anstellwinkel eine Streuung aufweist, die im Betrieb nicht ausgeregelt werden kann.

In einem mittleren Blattbereich fällt der maximal zulässige Anstellwinkel 14' in den Bereich des effektiven Anstellwinkels 18', da in diesem Bereich auch die relative Profildicke 16' noch relativ hoch ist. Im Betrieb der Windenergieanlage kann hierbei der Fall auftreten, dass der effektive Anstellwinkel 18' den maximal zulässigen Anstellwinkel 14' überschreitet. Tritt dieser Fall ein, löst sich die Strömung in diesem Bereich beginnend von der Hinterkante des Profils ab, wodurch der Widerstand des Rotorblattes steigt und sich die Leistungsentnahme verringert, da der Auftriebsbeiwert abfällt. Dieser kritische Bereich ist in der Fig. 1a mit dem Bezugszeichen 20' gekennzeichnet. Ein Betrieb der Windenergieanlage in dem kritischen Bereich 20' sollte unbedingt vermieden werden.

Erst mit weiterem Abfall der relativen Profildicke 16' mit zunehmendem Rotorradius r/R steigt der maximal zulässige Anstellwinkel 14' wieder an und verlässt den Bereich des effektiven Anstellwinkels 18'. Dem Verlauf des maximal zulässigen Anstellwinkels 14' liegt die Erkenntnis zugrunde, dass dünne Profile einen höheren zulässigen Anstellwinkel aufweisen.

Um auch Standorte mit geringen mittleren Windgeschwindigkeiten von beispielsweise kleiner als 6,5 m/s wirtschaftlich attraktiv zu machen, werden die Rotorblattlängen immer weiter gesteigert. Erfindungsgemäß wurde dabei erkannt, dass der Anstieg der Rotorblattmassen minimiert werden kann, wenn das Rotorblatt Profile mit hohen relativen Dicken über einen größeren Radiusbereich aufweist. Es wird somit vorgeschlagen, Profile mit relativen Dicken weiter nach außen in Richtung der Blattspitze zu verschieben. Dadurch verbessern sich die strukturellen Eigenschaften des Rotorblattes und damit auch die aerodynamischen Eigenschaften eines verlängerten Rotorblattes.

Ein schematischer Verlauf der relativen Profildicke gemäß einer Ausführung der Erfindung ist in Fig. 1b mit dem Bezugszeichen 16" dargestellt. Gegenüber dem Verlauf 16' der Fig. 1a ist bei dem Verlauf 16" der relativen Profildicke in Fig. 1b zu erkennen, dass die relative Profildicke d/t bis in einen höheren Radiusbereich r/R hoch bleibt.

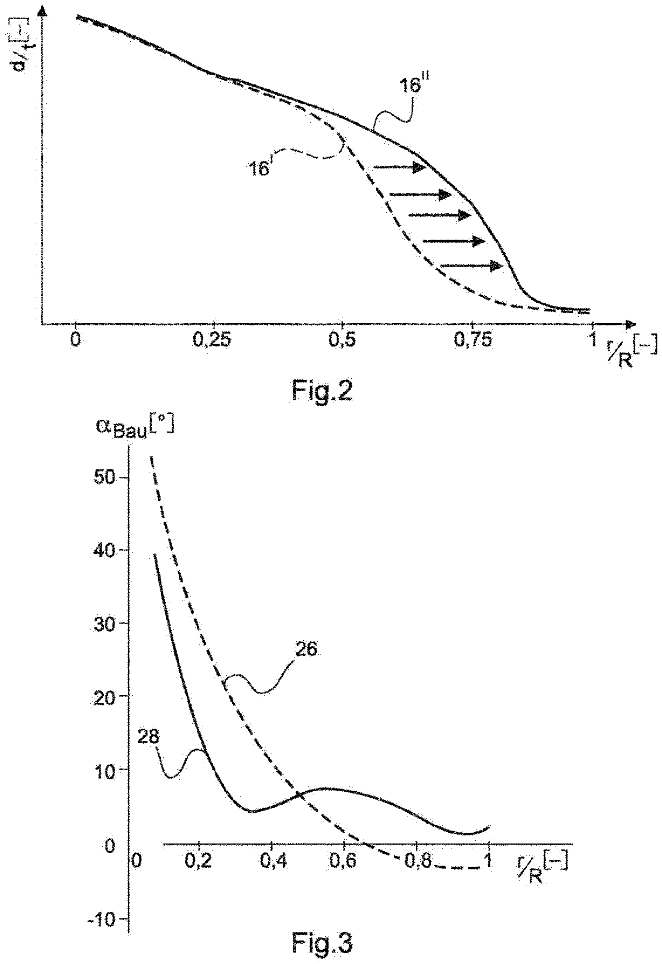

Ein Vergleich der Verläufe 16' und 16" ist vergrößert in Fig. 2 dargestellt. Fig. 2 zeigt den Verlauf 16' und den Verlauf 16" der relativen Profildicke d/t aufgetragen über den normierten Rotorradius r/R. Mit Pfeilen ist die Verschiebung der hohen relativen Profildicke in Richtung größerer Rotorradien gekennzeichnet. Gemäß des erfindungsgemäßen Verlaufs 16" der relativen Profildicke, weist ein erfindungsgemäßes Rotorblatt bis in Radiusbereiche größer 0,5 eine hohe relative Profildicke d/t auf. Beispielsweise weist ein erfindungsgemäßes Rotorblatt nun eine relative Profildicke d/t von größer 0,25 in Radiusbereichen größer 0,6 auf.

Unter weiterer Bezugnahme auf Fig. 1b verschiebt sich durch die hohen relativen Profildicken in hohen Radiusbereichen r/R auch der maximal zulässige Anstellwinkel 14" bis in hohe Radiusbereiche r/R. Dementsprechend vergrößert sich auch der kritische Bereich, in dem der effektive Anstellwinkel im Betrieb 18' oberhalb des maximal zulässigen Anstellwinkels 14" liegen kann.

Dieser vergrößerte kritische Bereich ist in Fig. 1b mit dem Bezugszeichen 20" gekennzeichnet und erstreckt sich bis in Radiusbereiche r/R zwischen ungefähr 0,75 und 0,8. Eine reine Erhöhung der relativen Profildicke in hohe Radiusbereiche führt daher zu einem großen kritischen Bereich 20", der sich über einen relativ großen Bereich des Rotorradius 12 erstreckt. Ein Betrieb der Windenergieanlage in diesem kritischen Bereich 20" muss unter allen Umständen jedoch vermieden werden.

Erfindungsgemäß wurde erkannt, dass sich durch Ändern des Einbauwinkels der Profile in dem mittleren Bereich der kritische Bereich 20" im Betrieb aussparen lässt. Dafür wird erfindungsgemäß der Einbauwinkel der Profile in dem mittleren Blattbereich erhöht. Auf diese Weise verringert sich der effektive Anstellwinkel im Betrieb in diesem Bereich. Der neue Bereich des effektiven Anstellwinkels im Betrieb ist in Fig. 1c mit dem Bezugszeichen 18" gekennzeichnet. Fig. 1c zeigt auch die aus Fig. 1b bekannten Verläufe der relativen Profildicke 16" und des maximal zulässigen effektiven Anstellwinkels 14". Durch den Anstieg des Einbauwinkels in dem Blattmittelbereich verringert sich im Betrieb der effektive Anstellwinkel 18" gemäß obenstehender Formel, sodass im Betrieb der effektive Anstellwinkel 18" den maximal zulässigen effektiven Anstellwinkel 14" nicht überschreitet. Auf diese Weise wird erreicht, dass die Windenergieanlage in ihrem gesamten Auslegungsbereich nicht in einem kritischen Bereich arbeitet, in dem die Strömung von den Rotorblättern ablöst.

In Fig. 3 ist nunmehr der Verlauf 28 des Einbauwinkels eines Rotorblattes gemäß einer Ausführungsform dargestellt. In dem Diagramm in Fig. 3 ist auf der Abszisse der normierte Rotorradius r/R und auf der Ordinate der Einbauwinkel $\alpha_{Bau}$ aufgetragen. Zum Vergleich ist ein Verlauf 26 des Einbauwinkels eines Rotorblattes des Standes der Technik in Fig. 3 dargestellt. In dem Verlauf 28 des Einbauwinkels ist deutlich zu erkennen, dass der Einbauwinkel in einem Blattinnenbereich zunächst abnimmt. Dieser Bereich kann beispielsweise bis zu 35% bezogen auf den Außenradius des Rotors betragen, was einem normierten Rotorradius von 0,35 entspricht. An den Blattinnenbereich schließt sich der Blattmittelbereich an, der im Wesentlichen dadurch gekennzeichnet ist, dass in diesem Bereich der Einbauwinkel 28 wieder ansteigt. Der Blattmittelbereich kann sich beispielsweise über einen Bereich von ungefähr 35 bis 60% bezogen auf den Außenradius erstrecken. Dies entspricht einem Bereich von 0,35 bis 0,6 des normierten Rotorradius. An den Blattmittelbereich schließt sich der Blattspitzenbereich an, der dadurch gekennzeichnet ist, dass in diesem Bereich der Einbauwinkel der Profile wieder abnimmt. Dieser Bereich kann sich beispielsweise in einem Radius größer als 60% bezogen auf den Außenradius (0,6 normierter Rotorradius) erstrecken.

In Figur 3 ist auch zu erkennen, dass der Verlauf 28 des Einbauwinkels eines erfindungsgemäßen Rotorblatts in dem Blattmittelbereich ein lokales Maximum aufweist. Der Einbauwinkel 28 in dem Bereich um das lokale Maximum kann nur noch das 0,125-fache des Einbauwinkels bei einer Radiusposition von 10% bezogen auf den Außenradius betragen. Nach Durchlaufen des lokalen Maximums nimmt der Einbauwinkel 28 in einem Bereich größer 60% bezogen auf den Außenradius weniger schnell ab als in dem Blattinnenbereich in einem Bereich von 0% bis 35% bezogen auf den Außenradius. In dem Blattspitzenbereich weist der Verlauf 28 des Einbauwinkels ein lokales Minimum auf. Insbesondere ist vorgesehen, dass der Verlauf 28 des Einbauwinkels in dem Blattspitzenbereich ein globales bzw. absolutes Minimum aufweist.

In einer besonderen Ausführungsform des erfindungsgemäßen Rotorblattes ist vorgesehen, dass im äußersten Blattspitzenbereich in der Nähe der Blattspitze der Einbauwinkel erneut ansteigt, was in der Fig. 3 auch zu erkennen ist.

Die Abszisse kennzeichnet in dem Diagramm der Fig. 3 die Nulllinie des Einbauwinkels. Die Nulllinie entspricht im Wesentlichen der Rotorebene des Rotors der Windenergieanlage, wobei der Einbauwinkel sich auf einen ungepitchten Betrieb, besonders in einem unteren Teillastbetrieb bezieht. Fig. 3 zeigt deutlich, dass der Einbauwinkel 28 über den gesamten Radius positiv ist. Demgegenüber zeigt der Verlauf 26 des Einbauwinkels, dass im Stand der Technik Rotorblätter existieren, bei denen in dem Blattmittelbereich bzw. Blattspitzenbereich der Einbauwinkel negativ sein kann.

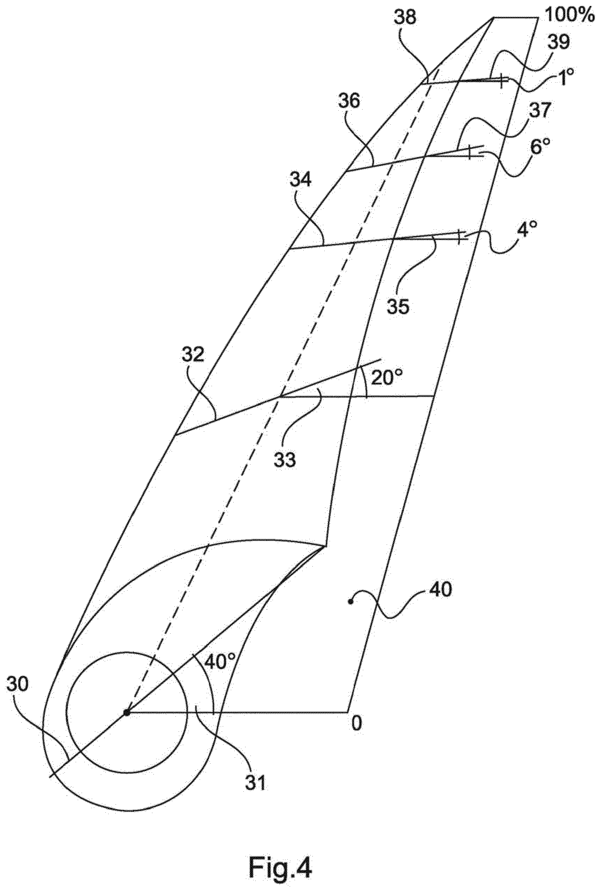

Fig. 4 zeigt rein schematisch in perspektivischer Ansicht eine Ausführungsform eines Rotorblattes. Gezeigt sind verschiedene Profilsehnen entlang des Rotorradius aus den einzelnen Bereichen des Rotorblattes. Dargestellt sind fünf Profilsehnen 30, 32, 34, 36, 38, die gegenüber einer Referenzebene 40, die die Rotorebene des Rotors der Windenergieanlage darstellt, einen Winkel aufweisen. Die Profilsehne 30 weist gegenüber der Rotorebene 40 einen großen Einbauwinkel 31 auf und stellt eine Profilsehne in der Nähe der Blattwurzel des Rotorblattes bei einer Radiusposition r/R von ungefähr 0,05 dar. Der Einbauwinkel 31 beträgt an dieser Radiusposition 40°.

Gezeigt ist auch die Profilsehne 32. Der Winkel 33 kennzeichnet den Einbauwinkel 33 der Profilsehne 32 gegenüber der Rotorebene 40. Der Einbauwinkel 33 beträgt ungefähr 20° bei ungefähr einem Rotorradius r/R von 0,25.

Die Profilsehne 34 kennzeichnet ebenfalls eine Profilsehne in dem Blattinnenbereich. Der Einbauwinkel 35 der Profilsehne 34 ist jedoch deutlich geringer als der Einbauwinkel 33 der Profilsehne 32. Der Einbauwinkel 35 beträgt 4° bei einem Rotorradius von ungefähr 0,35.

Die Profilsehne 36 kennzeichnet eine Profilsehne in dem Blattmittelbereich und weist einen größeren Einbauwinkel 37 gegenüber dem Einbauwinkel 35 der Profilsehne 34 auf. Der Einbauwinkel 37 ist jedoch geringer als der Einbauwinkel 33 der Profilsehne 32. Der Einbauwinkel 37 beträgt 6° bei einem Rotorradius von ungefähr 0,55.

Die Profilsehne 38 kennzeichnet eine Profilsehne in dem Blattspitzenbereich in der Nähe der Blattspitze. Der Einbauwinkel 39 ist geringer als der Einbauwinkel 37 der Profilsehne 36 und auch geringer als der Einbauwinkel 35 der Profilsehne 34. Der Einbauwinkel 39 der Profilsehne 38 beträgt 1° bei einem Rotorradius von 0,9.

Die Einbauwinkel 31, 33, 35, 37 und 39 spiegeln den Verlauf 28 aus Fig. 3 wider, sind jedoch nicht maßstabsgetreu, sondern lediglich schematisch dargestellt. Auch sind die genannten Gradzahlen und Rotorblattradien rein beispielhaft und sollen nicht beschränkend sein.

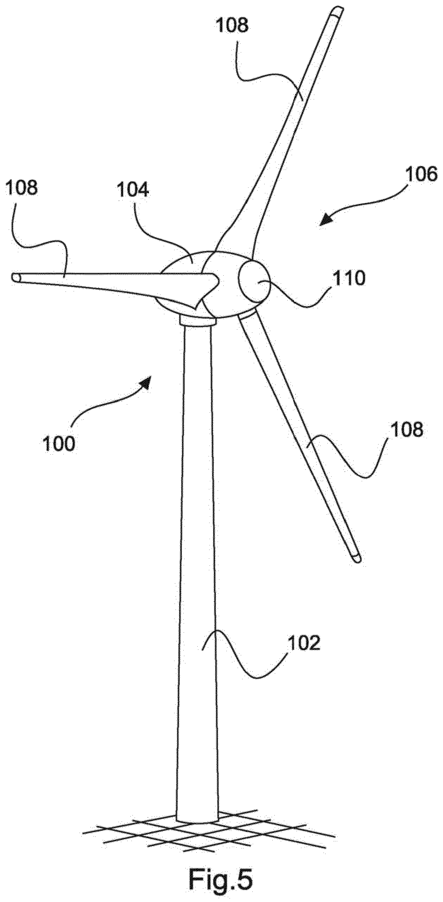

Fig. 5 zeigt eine erfindungsgemäße Windenergieanlage 100 mit einem Turm 102 und einer Gondel 104. An der Gondel 104 ist ein erfindungsgemäßer Rotor 106 mit drei erfindungsgemäßen Rotorblättern 108 und einem Spinner 110 angeordnet. Der Rotor 106 wird im Betrieb durch den Wind in einer Drehbewegung versetzt und treibt dadurch einen Generator in der Gondel 104 an.

Die schematisch dargestellten Rotorblätter 108 können beispielsweise mittels eines Blattanschlusses oder Blattadapters an einer Rotornabe der Windenergieanlage befestigt werden, die innerhalb des Spinners 110 angeordnet ist. Aus diesem Grund weisen die Verläufe der jeweiligen Größen des Rotorblattes in den Figuren 1a bis 1c, 2 und 3 auf der linken Seite einen freibleibenden Bereich auf, der im Wesentlichen den Bereich der Rotornabe widerspiegelt. Über an den Rotorblättern 108 der Windenergieanlage 100 angeordneten Pitchvorrichtungen können die Rotorblätter um ihre Längsachse gedreht werden, wodurch während des Betriebs der Einbauwinkel der Rotorblätter geändert werden kann.

**Patentansprüche**

1. Rotorblatt (108) eines aerodynamischen Rotors einer Windenergieanlage mit einer Rotordrehachse und einem Außenradius, umfassend

    - eine Blattwurzel zum Befestigen an einer Rotornabe,
    - eine zur Blattwurzel abgewandte Blattspitze,
    - eine von der Blattwurzel zur Blattspitze verlaufende Blattlängsachse,
    - eine in Bewegungsrichtung des Rotorblattes nach vorne weisende Blattvorderkante,
    - eine in Bewegungsrichtung des Rotorblattes nach hinten weisende Blatthinterkante und
    - sich entlang der Blattlängsachse verändernde Profilschnitte, wobei

    - jeder Profilschnitt eine sich von der Blattvorderkante zur Blatthinterkante erstreckende Profilsehne (30,32,34,36,38) aufweist und jede Profilsehne einen Einbauwinkel (31,33,35,37,39) als Winkel in Bezug auf eine Rotorebene (40) aufweist, wobei der Einbauwinkel (31,33,35,37,39) von der Blattwurzel zur Blattspitze

    - in einem zur Blattwurzel weisenden Blattinnenbereich zunächst abnimmt,
    - in einem Blattmittelbereich wieder zunimmt und
    - in einem zur Blattspitze weisenden Blattspitzenbereich wieder abnimmt,

    **dadurch gekennzeichnet, dass** der Einbauwinkel in dem Blattmittelbereich von 35% bis 60% bezogen auf den Außenradius (R) ansteigt.

2. Rotorblatt nach Anspruch 1, **dadurch gekennzeichnet, dass** zumindest abschnittsweise in einem Bereich größer 60% bezogen auf den Außenradius Profilschnitte eine relative Profildicke mit einem Wert größer als 0,25 aufweisen.

3. Rotorblatt nach einem der vorstehenden Ansprüche, **dadurch gekennzeichnet, dass** der Einbauwinkel in einem Bereich zwischen 35% und 80% bezogen auf den Außenradius ein lokales Maximum aufweist.

4. Rotorblatt nach einem der vorstehenden Ansprüche, **dadurch gekennzeichnet, dass** der Einbauwinkel in einem Bereich zwischen 80% und 100% bezogen auf den Außenradius ein lokales, insbesondere ein absolutes Minimum aufweist.

5. Rotorblatt nach einem der vorstehenden Ansprüche, **dadurch gekennzeichnet, dass** die Einbauwinkel der Profilsehnen über die gesamte Rotorblattlänge positiv sind.

6. Rotorblatt nach einem der vorstehenden Ansprüche, **dadurch gekennzeichnet, dass** der Einbauwinkel in einem Bereich zwischen 30% und 40% bezogen auf den Außenradius 4° beträgt und in einem Bereich zwischen 45% und 60% bezogen auf den Außenradius 5° beträgt und in einem Bereich zwischen 85% und 95% bezogen auf den Außenradius ungefähr 1° beträgt.

7. Rotorblatt nach einem der vorstehenden Ansprüche, **dadurch gekennzeichnet, dass** der Blattinnenbereich sich ungefähr bis zu einem Radius von 35% bezogen auf den Außenradius erstreckt.

8. Rotorblatt nach einem der vorstehenden Ansprüche, **dadurch gekennzeichnet, dass** ein Verhältnis des Einbauwinkels bei einer Radiusposition von ungefähr 60% zu dem Einbauwinkel bei einer Radiusposition von 40% größer als 1,2, vorzugsweise größer als 1,5, insbesondere größer als 2 ist.

9. Rotorblatt nach einem der vorstehenden Ansprüche, **dadurch gekennzeichnet, dass** der Blattspitzenbereich sich in einem Radius größer als 60% bezogen auf den Außenradius erstreckt.

**10.** Rotor (106) einer Windenergieanlage mit einer Rotordrehachse und einem Außenradius, wobei der Rotor mindestens ein Rotorblatt nach einem der vorstehenden Ansprüche aufweist.

**11.** Windenergieanlage (100) zum Erzeugen von elektrischem Strom mit wenigstens einem Rotorblatt nach einem der Ansprüche 1 bis 9 und/oder mit einem Rotor nach Anspruch 10.


**Claims**

**1.** A rotor blade (108) of an aerodynamic rotor of a wind turbine having a rotor axis of rotation and an outer radius, comprising

- a blade root for fastening to a rotor hub,
- a blade tip facing away from the blade root,
- a blade longitudinal axis extending from the blade root to the blade tip,
- a blade front edge facing toward the front in the direction of movement of the rotor blade,
- a blade rear edge facing toward the rear in the direction of movement of the rotor blade, and
- profile sections which change along the blade longitudinal axis, wherein

- each profile section has a profile chord (30,32,34,36,38) which extends from the blade front edge to the blade rear edge, and each profile chord has an installation angle (31,33,35,37,39) as an angle in relation to a rotor plane (40), wherein the installation angle ((31,33,35,37,39) from the blade root to the blade tip

- first decreases in a blade inner region oriented toward the blade root,
- increases again in a blade central region, and
- decreases again in a blade tip region oriented toward the blade tip,

**characterized in that** the installation angle increases in the blade central region from 35% to 60% with respect to the outer radius (R).

**2.** The rotor blade as claimed in claim 1, **characterized in that** profile sections have a relative profile thickness with a value of greater than 0.25 at least in certain portions in a region of greater than 60% with respect to the outer radius.

**3.** The rotor blade as claimed in one of the preceding claims, **characterized in that** the installation angle has a local maximum in a region of between 35% and 80% with respect to the outer radius.

**4.** The rotor blade as claimed in one of the preceding claims, **characterized in that** the installation angle has a local, in particular an absolute, minimum in a region of between 80% and 100% with respect to the outer radius.

**5.** The rotor blade as claimed in one of the preceding claims, **characterized in that** the installation angles of the profile chords are positive over the entire rotor blade length.

**6.** The rotor blade as claimed in one of the preceding claims, **characterized in that** the installation angle is 4° in a region of between 30% and 40% with respect to the outer radius and is 5° in a region of between 45% and 60% with respect to the outer radius and is approximately 1° in a region of between 85% and 95% with respect to the outer radius.

**7.** The rotor blade as claimed in one of the preceding claims, **characterized in that** the blade inner region extends approximately to a radius of 35% with respect to the outer radius.

**8.** The rotor blade as claimed in one of the preceding claims, **characterized in that** a ratio of the installation angle at a radius position of approximately 60% to the installation angle at a radius position of 40% is greater than 1.2, preferably greater than 1.5, in particular greater than 2.

**9.** The rotor blade as claimed in one of the preceding claims, **characterized in that** the blade tip region extends in a radius of greater than 60% with respect to the outer radius.

**10.** A rotor (106) of a wind turbine having a rotor axis of rotation and an outer radius, wherein the rotor has at least one rotor blade as claimed in one of the preceding claims.

**11.** Wind turbine (100) for generating electrical current having at least one rotor blade as claimed in one of claims 1 to 9 and/or having a rotor as claimed in claim 10.


**Revendications**

**1.** Pale de rotor (108) d'un rotor aérodynamique d'une éolienne avec un axe de rotation de rotor et un rayon extérieur, comprenant

- un pied de pale destiné à être fixé à un moyeu de rotor,
- une pointe de pale opposée au pied de pale,
- un axe longitudinal de pale s'étendant du pied de pale à la pointe de pale,
- un bord d'attaque de pale pointant vers l'avant dans le sens de déplacement de la pale de rotor,
- un bord de fuite de pale pointant vers l'arrière dans le sens de déplacement de la pale de rotor, et
- des coupes de profil variant le long de l'axe longitudinal de pale, dans laquelle

-- chaque coupe de profil présente une corde de profil (30, 32, 34, 36, 38) s'étendant du bord d'attaque de pale au bord de fuite de pale et chaque corde de profil présente un angle de montage (31, 33, 35, 37, 39) en tant qu'angle par rapport à un plan de rotor (40), dans laquelle

l'angle de montage (31, 33, 35, 37, 39), du pied de pale à la pointe de pale

--- diminue dans un premier temps dans une zone intérieure de pale pointant vers le pied de pale,
--- augmente à nouveau dans une zone centrale de pale et
--- diminue à nouveau dans une zone de pointe de pale pointant vers la pointe de pale,

**caractérisée en ce que** l'angle de montage augmente dans la zone centrale de pale de 35 % à 60 % par rapport au rayon extérieur (R).

2. Pale de rotor selon la revendication 1, **caractérisée en ce que** des coupes de profil présentent une épaisseur de profil relative avec une valeur supérieure à 0,25 au moins par endroits dans une plage supérieure à 60 % par rapport au rayon extérieur.

3. Pale de rotor selon l'une quelconque des revendications précédentes, **caractérisée en ce que** l'angle de montage présente un maximum local dans une plage entre 35 % et 80 % par rapport au rayon extérieur.

4. Pale de rotor selon l'une quelconque des revendications précédentes, **caractérisée en ce que** l'angle de montage présente un minimum local, en particulier un minimum absolu, dans une plage entre 80 % et 100 % par rapport au rayon extérieur.

5. Pale de rotor selon l'une quelconque des revendications précédentes, **caractérisée en ce que** les angles de montage des cordes de profil sont positifs sur toute la longueur de pale de rotor.

6. Pale de rotor selon l'une quelconque des revendications précédentes, **caractérisée en ce que** l'angle de montage est égal à 4° dans une plage entre 30 % et 40 % par rapport au rayon extérieur et est égal à 5° dans une plage entre 45 % et 60 % par rapport au rayon extérieur et est égal approximativement à 1° dans une plage entre 85 % et 95 % par rapport au rayon extérieur.

7. Pale de rotor selon l'une quelconque des revendications précédentes, **caractérisée en ce que** la zone intérieure de pale s'étend approximativement jusqu'à un rayon de 35 % par rapport au rayon extérieur.

8. Pale de rotor selon l'une quelconque des revendications précédentes, **caractérisée en ce qu'**un rapport entre l'angle de montage pour une position de rayon d'approximativement 60 % et l'angle de montage pour une position de rayon de 40 % est supérieur à 1,2, de préférence supérieur à 1,5, en particulier supérieur à 2.

9. Pale de rotor selon l'une quelconque des revendications précédentes, **caractérisée en ce que** la zone de pointe de pale s'étend dans un rayon supérieur à 60 % par rapport au rayon extérieur.

10. Rotor (106) d'une éolienne avec un axe de rotation de rotor et un rayon extérieur, dans lequel le rotor présente au moins une pale de rotor selon l'une quelconque des revendications précédentes.

11. Éolienne (100) pour produire du courant électrique avec au moins une pale de rotor selon l'une quelconque des revendications 1 à 9 et/ou avec un rotor selon la revendication 10.

Fig. 1a

Fig. 1b

Fig. 1c

Fig.2

Fig.3

Fig.4

Fig.5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008052858 A1
- DE 102009060650 A1
- US 20140119915 A1
- US 20140286787 A1
- EP 0100131 A1
- EP 2840255 A2